# EUROPÄISCHE PATENTSCHRIFT

(11) **EP 2 702 387 B1**
(45) Veröffentlichungstag und Bekanntmachung des Hinweises auf die Patenterteilung: **11.03.2015**
(21) Anmeldenummer: 12718913.2
(22) Anmeldetag: 26.04.2012
(51) Int. Cl.: G01N 3/08, G01N 3/32

(54) **SEILPRÜFSTAND**
ROPE TEST STAND
BANC D'ESSAI DE CÂBLES

(30) Priorität: 26.04.2011 DE 102011018535
(43) Veröffentlichungstag der Anmeldung: 05.03.2014
(73) Patentinhaber: Liebherr-Components Biberach GmbH, 88400 Biberach an der Riß (DE)
(72) Erfinder: MUPDENDE, Ilaka, 89231 Neu-Ulm (DE); STANGER, Norbert, 88448 Attenweiler (DE)
(74) Vertreter: Thoma, Michael
(86) Internationale Anmeldenummer: PCT/EP2012/001795
(87) Internationale Veröffentlichungsnummer: WO 2012/146380

(56) Entgegenhaltungen:
- EP-A2- 1 103 511
- DE-U1- 29 503 416
- JP-A- 7 172 763
- JP-A- 10 318 741
- JP-A- 2000 327 272

## Beschreibung

Die vorliegende Erfindung betrifft einen Seilprüfstand zur Prüfung eines Prüfseils auf Lebensdauer, Ablegereife, zulässige Biegewechselzahl und/oder Spulverhalten, mit einem Umlenksystem umfassend zumindest eine Umlenkrolle zur Umlenkung des Prüfseils, einem Prüfseilantrieb zum Auf- und Abspulen des Prüfseils über das Umlenksystem, und einer Prüflast zur Belastung des Prüfseils.

Sicherheitsrelevante Seile wie Stahl- und Faserseile von Hebezeugen wie Kranen müssen unter Prüfstandsbedingungen auf ihre Lebensdauer, auf ihre Ablegereife und ihre zulässige Biegewechselzahl geprüft werden, um verlässliche Aussagen darüber treffen zu können, wie lange das entsprechende Seil in Betrieb sein darf. Hierzu werden üblicherweise Seilprüfstände verwendet, bei denen ein zu prüfendes Prüfseil unter der definierten Belastung einer Prüflast um zumindest eine Umlenkrolle geführt wird, um einen entsprechenden Biegevorgang unter Last zu simulieren. Üblicherweise werden hierbei mehrere Seilrollen verwendet, um gegenläufige Biegungen zu simulieren, wobei in vielen Prüfzyklen die Prüflast angehoben und abgesenkt wird, so dass das Prüfseil beim zyklischen Auf- und Abspulen entsprechende Biegewechsel erfährt. Regelmäßig ermitteln herkömmliche Seilstände hierbei die Seilbiegewechselzahl bis zur Ablegereife und bis zum Bruch des Seiles durch wechselseitiges Bewegen des Seiles über die zumindest eine Seilrolle unter Veränderung der Seilzugkraft beispielsweise durch Anhängen verschiedener Prüflasten sowie des kleineren oder größeren Verhältnisses von Seilrollendurchmesser zu Seildurchmesser. Hierdurch können Seile mit unterschiedlichen Materialien sowie Macharten geprüft und die Ablegereife sowie die Lebensdauer im Zusammenhang mit der Biegewechselzahl ermittelt werden.

Um nicht nur Ergebnisse über die reine Biegewechselzahl zu erhalten, sondern auch zu Ergebnissen über die Lebensdauer eines Seiles zu kommen, welches in einem Seiltrieb mit Seiltrommel und Seilrollen zum Einsatz kommt, wie dies z.B. bei Kranhubwerken oder Kranausleger-Verstellwerken der Fall ist, werden bislang Seilprüfstände verwendet, die aus einem Turm mit Kragträger oder zwei Türmen mit einem Verbindungsträger bestehen, wobei eine Seilwinde in der Regel am Fuße des Turmes angeordnet ist, von der das Prüfseil zum oberen Ende des Turmes, den Kragträger oder die Mitte des Verbindungsträgers über mehrere Umlenkrollen zu einem einfach oder mehrfach eingescherten Lasthaken geführt ist. An den Lasthaken wird eine Prüflast angebracht, deren Heben und Senken einen Prüfzyklus bei konstanter Last bildet. Um einen Absturz der Last bei Seilbruch zu vermeiden, kann die Last über senkrechte Schienen geführt sein, die eine Fangvorrichtung für die Last ähnlich wie bei Personenaufzügen besitzen. Nach einem Seilbruch ist das Wiederinstandsetzen des Prüfstands jedoch nicht einfach und bisweilen recht zeitaufwändig.

Weiterhin ist an bisherigen Seilprüfständen nachteilig, dass sie die an Kranen und Hebezeugen auftretenden Lastzyklen nur begrenzt realistisch nachbilden. Üblicherweise haben die Seilprüfstände nur die Möglichkeit, einen Prüfzyklus mit Heben und Senken unter der jeweils angehängten Prüflast zu durchfahren. Hierdurch hat das Seil im Wesentlichen die gleiche Zugbelastung sowohl beim Heben als auch beim Senken, die hierbei nur durch Wirkungsgradunterschiede variiert. Dies entspricht jedoch nicht dem tatsächlichen Seileinsatz im Seiltrieb z.B. eines Hubwerks bei Hebzeugen. Bei Kranen z.B. wird in der Regel eine Last gehoben, die Last in der Höhe abgesetzt und ohne Last zur nächsten Last gefahren bzw. wieder abgesenkt. Ein volles Hubwerkslastspiel besteht hierbei in der Regel zu etwa 50 % Heben unter Last und 50 % Senken ohne Last. Je nach Einsatz können jedoch auch Hubwerkslastspiele mit umgekehrter Belastung auftreten, bei denen die Lastaufnahme in voller Hubhöhe oder die Lastabgabe in der Tiefe erfolgt, wie dies z.B. bei Tunnelbaustellen der Fall ist. Hier umfassen Hubwerkslastspiele in der Regel 50 % Senken unter Last und 50 % Heben ohne Last.

Diese in der Praxis an Kranen oder anderen Hebezeugen auftretenden Lastspiele können von bisherigen Seilprüfständen nur unzureichend abgebildet werden, da üblicherweise eine Lastabgabe oder eine Lastaufnahme nach einem Durchfahren der Heben-Strecke nicht möglich ist. Dies wäre jedoch für eine praxisgerechte Ermittlung der Seillebensdauer von Bedeutung.

Weiterhin können bisherige Seilprüfstände auch das Spulverhalten des Seils nicht ausreichend praxisgerecht ermitteln. Wird unter gleich bleibendem Seilzug die Prüflast angehoben und abgesenkt und dementsprechend das Prüfseil unter konstanter Belastung auf- und abgespult, zeigt das Prüfseil erfahrungsgemäß ein gutes Spulverhalten. In der Praxis ändert sich das Spulverhalten des Seils jedoch dann, wenn durch Absetzen der Last in der Höhe das Abspulen des Seiles ohne Last erfolgt und/oder durch Absetzen der Last in der Tiefe das Aufspulen des Seiles ohne Last erfolgt. Zudem beeinflussen derartige Belastungswechsel beim Auf und Abspulen des Seils auch dessen Lebensdauer, was durch bisherige Seilprüfstände nicht ausreichend nachgebildet werden kann. Das Spulverhalten bei wechselndem Seilzug ist auch gerade dann von Interesse, wenn im Mehrlagenbetrieb gefahren wird, d.h. das Seil nicht nur einlagig, sondern mehrlagig auf die Winde aufgespult wird, da hier das Seil durch übereinanderliegende Seillagen anders beansprucht wird. Auch dies konnte bei bisherigen Prüfständen nicht ausreichend nachvollzogen werden.

Der vorliegenden Erfindung liegt daher die Aufgabe zugrunde, einen verbesserten Seilprüfstand der eingangs genannten Art zu schaffen, der Nachteile des Standes der Technik vermeidet und Letzteren in vorteilhafter Weise weiterbildet. Insbesondere sollen bei einfachem Aufbau des Seilprüfstands die an Seilen von Hebezeugen wie Kranen tatsächlich auftretenden Belastungen praxisgerechter nachgebildet werden können, ohne dies durch ein aufwändiges Handling beim Durchfahren der Prüfzyklen wie beispielsweise An- und Abhängen zusätzlicher Prüflasten erkaufen zu müssen.

Erfindungsgemäß wird die genannte Aufgabe durch einen Seilprüfstand gemäß Anspruch 1 gelöst. Bevorzugte Ausgestaltungen der Erfindung sind Gegenstand der abhängigen Ansprüche.

Es wird also vorgeschlagen, am Seilprüfstand zwei Seilantriebe vorzusehen, mittels derer die Belastung des Prüfseils für verschiedene Phasen der Prüfzyklen verändert werden kann, ohne hierbei die am Prüfseil hängende Prüflast austauschen oder verändern zu müssen. Zusätzlich zu dem an sich bislang schon verwendeten Prüfseilantrieb wird ein Zusatzseilantrieb vorgesehen, dessen Zuschalten oder Abschalten die Prüfseilkraft verändert. Erfindungsgemäß umfasst der Seilprüfstand einen Zusatzseilantrieb zum Auf- und Abspulen eines Sicherheitsseils und/oder des genannten Prüfseils, sowie eine Steuervorrichtung zur Steuerung des Zusatzseilantriebs und/oder des Prüfseilantriebs in aufeinander abgestimmter Weise derart, dass die Belastung des Prüfseils für unterschiedliche Prüfseilabschnitte und/oder unterschiedliche Spulrichtungen und/oder unterschiedliche Spulzyklen und/oder unterschiedliche Phasen eines Spulzyklus unterschiedlich einstellbar ist. Hierdurch kann ohne Veränderung der Prüflast durch ein stärkeres oder schwächeres Zuschalten des Zusatzantriebs bzw. eine Erhöhung oder Erniedrigung der vom Zusatzseilantrieb zugeschalteten Seilkraft die auf das Prüfseil wirkende Last variiert werden, ohne dass hierzu Umbaumaßnahmen am Seilprüfstand wie beispielsweise Ersetzen der Prüflast notwendig wären. Durch den variabel steuerbaren Zusatzseilantrieb kann die auf das Prüfseil wirkende Last in einfacher Weise über die auf- und abgespulte Länge des Prüfseils variiert werden.

In Weiterbildung der Erfindung kann hierbei die genannte Steuervorrichtung derart ausgebildet sein, dass die Belastung des Prüfseils durch stärkeres bzw. schwächeres Zuschalten des Zuschaltantriebs auch während eines Spulvorganges, insbesondere auch während eines Hubvorgangs und/oder während eines Senkvorgangs, variierbar ist. Hierdurch können in der Praxis auch während eines Hub- oder Senkvorganges changierende Lasten simuliert werden, wie sie beispielsweise beim Seiltrieb eines Verstellauslegers auftreten, beispielsweise durch Aufwippen eines Derrickauslegers, während dessen die Last auf den Seilverstelltrieb aufgrund des kleiner werdenden Hebelarms kleiner wird.

Alternativ oder zusätzlich kann die Steuervorrichtung auch vorsehen, die Belastung des Prüfseils durch stärkeres oder schwächeres Zuschalten des Zusatzantriebs an verschiedenen Prüfseilabschnitten und/oder an verschiedenen Stellen des Prüflasthubwegs zu variieren. Hierdurch können variierende Hubhöhen bzw. das Absetzen oder Aufnehmen einer Last in verschiedenen Hubhöhen simuliert werden, so dass das Seil an unterschiedlichen Seilabschnitten unterschiedlichen Lasten unterworfen wird, was sich bei entsprechenden Lastspielzahlen auf die Lebensdauer bzw. Ablegereife des Seils auswirkt.

Alternativ oder zusätzlich kann die Steuervorrichtung auch derart ausgebildet sein, dass Prüfzyklen mit Volllast beim Heben und ohne Last beim Senken und/oder Prüfzyklen ohne Last beim Heben und mit Volllast beim Senken durchfahrbar sind. Hierdurch können insbesondere bei Kranen oder verwandten Hebezeugen auftretende Hubwerkszyklen mit etwa 50 % Heben mit Last und 50 % Senken ohne Last oder auch umgekehrt, je nach Einsatz, mit etwa 50 % Heben ohne Last und 50 % Senken mit Last nachgebildet werden, um die Ablegereife und die Lebensdauer eines Hubwerkseils zu ermitteln.

In Weiterbildung der Erfindung kann der genannte Zusatzseilantrieb dazu verwendet werden, ein Sicherheitsseil auf- und abzuspulen, das vorzugsweise über eine eigene Seileinscherung zur Prüflast geführt ist. Das genannte Sicherheitsseil dient hierbei vorteilhafterweise nicht nur dem Zweck, die Prüflast bei Bruch des Prüfseils abzusichern - was an sich schon vorteilhaft ist, da hierdurch auf die bislang üblichen Führungsschienen mit Fangvorrichtung verzichtet werden kann - , sondern kann auch dazu verwendet werden, die Seillast, die auf das Prüfseil wirkt, zu variieren, indem das Sicherheitsseil durch Zuschalten des Zusatzseilantriebes stärker oder schwächer zugeschaltet wird. Insbesondere kann in Weiterbildung der Erfindung das Prüfseil von dem Prüfseilantrieb und das Sicherheitsseil von dem Zusatzantrieb auf- und abgespult werden derart, dass ein Heben und Senken der Prüflast wahlweise von dem Prüfseil alleine oder von dem Sicherheitsseil oder sowohl von dem Prüfseil als auch von dem Sicherheitsseil bewerkstelligt werden kann. Soll die Prüflast alleine vom Prüfseil gehoben werden, wird das Sicherheitsseil im Wesentlichen lastfrei lediglich nachgeführt. Soll umgekehrt ein Heben ohne Belastung des Prüfseils erfolgen, wird die Prüflast durch das Sicherheitsseil angehoben, während des Prüfseil lediglich nachgeführt wird. Von diesen beiden Einzelhub- oder -senkvorgängen abgesehen können auch Mischhübe gefahren werden, bei denen die Prüflast auf das Prüfseil und das Sicherheitsseil verteilt und somit sowohl von Prüfseil als auch vom Sicherheitsseil angehoben oder abgesenkt wird. Dieses Aufteilen der Prüflast kann hierbei einerseits derart erfolgen, dass ein Teil der Wegstrecke eines Hub- oder Senkvorganges ganz oder teilweise vom Sicherheitsseil übernommen wird, oder andererseits auch derart, dass über die gesamte Wegstrecke das Sicherheitsseil einen Teil der Prüflast übernimmt, um einen Hub- oder Senkvorgang mit reduzierter Last auf das Hubseil durchzuführen, wobei ggf. der Teil der Last, der vom Sicherheitsseil übernommen wird, während eines Hub- oder Senkvorgangs auch variieren kann, um in der vorgenannten Weise changierende Lasten wie sie beispielsweise beim Aufwippen oder Niederwippen eines Auslegers auftreten, nachzubilden.

Alternativ oder zusätzlich kann in Weiterbildung der Erfindung das Prüfseil über eine Seileinscherung zur Prüflast geführt und über das Umlenksystem sowohl zum Prüfseilantrieb als auch zu dem genannten Zusatzseilantrieb oder einem weiteren Zusatzseilantrieb geführt sein, wobei vorteilhafterweise die genannte Steuervorrichtung derart ausgebildet ist, dass der Prüfseilantrieb und der Zusatzseilantrieb zueinander gegenläufig betreibbar sind derart, dass das Prüfseil vom Prüfseilantrieb auf den Zusatzseilantrieb und/oder umgekehrt vom Zusatzseilantrieb auf den Prüfseilantrieb spulbar ist. Ist nur ein Zusatzseilantrieb, vorgesehen, kann für einen entsprechenden Prüfvorgang das Prüfseil anstelle des zuvor genannten Sicherheitsseils auf den Zusatzseilantrieb geführt werden. Vorteilhafterweise kann jedoch auch ein weiterer Zusatzantrieb vorgesehen sein, auf den in der genannten Weise das Prüfseil geführt wird, während auf den anderen Zusatzseilantrieb in der zuvor genannten Weise das Sicherheitsseil gespult wird, das vorzugsweise über eine separate Seileinscherung zur Prüflast geführt ist. Hierdurch kann zum einen die Prüflast gegen Bruch des Prüfseils gesichert werden. Zum anderen können ohne Umrüstarbeiten verschiedene Prüfmodi für das Prüfseil durchgeführt werden, nämlich zum einen die Prüfmodi, bei denen in der vorgenannten Weise durch Variieren des Zuschalten des Sicherheitsseils verschiedene Lastzustände am Prüfseil bewirkt bzw. Durchfahren werden. Zum anderen können ohne Zuschalten des genannten Sicherheitsseils Prüfmodi durchfahren werden, bei denen das Prüfseil vom Prüfseilantrieb auf den Zusatzseilantrieb und umgekehrt gespult wird.

Hierdurch kann zunächst unabhängig von der Höhe des Seilprüfstands und dem zur Verfügung stehenden Hubweg für die Prüflast eine größere Länge des Prüfseils Biegewechseln unterworfen werden. Insbesondere können hierdurch auch sehr lange Seile geprüft werden. Beispielsweise kann durch den Prüfseilantrieb und/oder den Zusatzseilantrieb die Prüflast geringfügig vom Boden abgehoben werden. In diesem Zustand kann dann das Prüfseil von der einen zur anderen Winde oder umgekehrt unter Volllast oder Teillast auf- oder abgespult werden. Die Spulung der maximalen Seillänge ist lediglich von der Seilspeichermöglichkeit der Trommel, nicht jedoch von der Höhe des Seilprüfstands abhängig. Hierdurch kann beispielsweise das Spulverhalten im Mehrlagenbetrieb auf der Trommel geprüft werden. Da sich die Last in Bodennähe befindet, kann auch ohne Lastabsturzsicherung gefahren werden.

Weiterhin können jedoch auch bei diesem Seilprüfmodus verschiedene Lastzustände für das Prüfseil vorgesehen werden, indem die Prüflast teilweise oder ganz auf dem Boden abgesetzt wird. Um die Zahl der erreichbaren Lastzustände zu erhöhen, kann in vorteilhafter Weiterbildung der Erfindung die Prüflast in mehrere Teilprüflasten unterteilt sein, so dass durch Absetzen einer unterschiedlichen Anzahl von Teillasten die auf das Prüfseil einwirkende Rest-Prüflast variiert werden kann.

Durch zumindest teilweises Absetzen der Prüflast können auch ohne Zuschalten des vorgenannten Sicherheitsseiles gänzlich lastfreie oder mit Teillasten beaufschlagte Hub- oder Senkzyklen durchfahren werden, wobei durch Veränderung des Zeitpunkts des Absetzens der Prüflast auch nur Teile eines Hub- oder Senkzyklus oder unterschiedlich lange Hub- oder Senkzyklen mit reduzierter Last oder ganz lastfrei durchfahren werden können.

Um den Betrieb der Zusatzseilwinde auf den Betrieb der Prüfseilwinde oder umgekehrt exakt abstimmen zu können, kann in vorteilhafter Weiterbildung der Erfindung der Prüfseilantrieb und/oder der Zusatzseilantrieb einen Elektromotor als Antriebseinheit umfassen, der mittels eines Frequenzumrichters präzise gesteuert werden kann. Insbesondere kann die genannte Steuervorrichtung zur Steuerung des Prüfseilantriebs und des Zusatzseilantriebs eine elektronische Regelung umfassen, die unter Nutzung entsprechender Sensoren eine Weg- und Kraftmessung des Prüfseils ermöglicht. In vorteilhafter Weiterbildung der Erfindung umfasst die Steuervorrichtung geeignete Erfassungsmittel, um die Trommelumdrehungen der Hubwinden des Prüfseilantriebs und des Zusatzseilantriebes zu bestimmen, die Drehzahl zu messen, die abgespulte oder aufgespulte Seillänge zu bestimmen, die Lastspielzahl zu bestimmen, den Seilzustand zu überwachen, die Anzahl der Hübe zu bestimmen, die Betriebsstunden zu bestimmen und/oder weitere Betriebsparameter, die für die Lebensdauer, die Ablegereife, die zulässige Biegewechselzahl und/oder das Spulverhalten des Prüfseils relevant sind.

Die Bestimmungsmittel zur Bestimmung der Ablegereife und/oder der Lebensdauer können hierbei grundsätzlich verschieden ausgebildet sein.

Vorteilhafterweise umfasst die Erfassungseinrichtung der Vorrichtung zur Erkennung der Ablegereife mehrere, verschieden ausgebildete Erfassungsmittel zur magnetischen, mechanischen, optischen und/oder elektronischen Erfassung mehrerer verschiedener Seilkenngrößen, die von der Auswerteeinheit einzeln und/oder in Kombination miteinander zur Erkennung der Ablegereife auswertbar sind. Der Heranziehung verschiedener Seilkenngrößen für die Bestimmung der Ablegereife liegt die Überlegung zugrunde, dass je nach Belastung und Einwirkungen auf das Prüfseit es von Fall zu Fall eine andere Kenngröße sein kann, die den Seilverschleiß anzeigt bzw. die Ablegereife ankündigt, bzw. sich die Ablegereife ggf. auch nicht durch eine tatsächlich größere Veränderung einer nur einzigen Kenngröße, sondern durch kleinere Veränderungen mehrerer Kenngrößen zeigt.

In Weiterbildung der Erfindung ist die genannte Auswerteeinheit derart ausgebildet, dass ein Ablegesignal dann bereitgestellt wird, wenn zumindest eine der erfassten Seilkenngrößen bzw. deren Veränderung einen zugehörigen Grenzwert überschreitet/unterschreitet, sowie dann, wenn eine aus allen erfassten bzw. einer Untergruppe der erfassten Seilkenngrößen abgeleitete, mittelbare Seilkenngröße bzw. deren Veränderung einen zugehörigen Grenzwert überschreitet/unterschreitet.

Hierbei können in Weiterbildung der Erfindung verschiedene Seilkenngrößen herangezogen werden. Nach einem weiteren Aspekt der vorliegenden Erfindung wird hierbei in vorteilhafter Weise eine Veränderung eines in das Prüfseil eingebetteten Indikatorprofils, das aus einem anderen Material als die Seilfasern besteht, überwacht. Mittels eines derartigen Indikatorprofils, das im Kern der Litze eingebettet oder auch zwischen den Fasersträngen des Prüfseils angeordnet sein kann, kann die nur schwer erfassbare Veränderung der Fasern bzw. Faserstränge des Prüfseils selbst umgangen werden, insbesondere wenn das Indikatorprofil hinsichtlich seiner Ausbildung und/oder hinsichtlich seines Materials so gewählt wird, dass das Indikatorprofil schneller als die Faserstränge des Prüfseils Veränderungen zeigt und/oder solche Veränderungen leichter erfassbar sind. Die Überwachung eines solchen Indikatorprofils im Prüfseil kann hierbei auch nur für sich ohne Überwachung weiterer Kenngrößen besondere Vorteile mit sich bringen.

Insbesondere kann das Indikatorprofil aus einem ein Magnetfeld beeinflussenden und/oder magnetisch leitenden und/oder magnetisierbaren Material, vorzugsweise aus einem metallischen Endlosprofil, bestehen. Die Erfassungsmittel sind dabei vorteilhafterweise magnetisch arbeitend ausgebildet, wobei insbesondere ein Magnetfeldsensor vorgesehen sein kann, mittels dessen die magnetischen Eigenschaften des genannten Indikatorprofils bestimmt werden können. Insbesondere verändern sich die magnetischen Eigenschaften des Indikatorprofils bei einem Bruch des Indikatorprofils, so dass eine entsprechende Veränderung des Magnetflusses bzw. des Magnetfelds leicht erfasst und als Verschleißanzeige genutzt werden kann. Tritt ein Bruch des magnetisch leitenden Indikatorprofils auf, kann dies durch eine magnetinduktive Überwachung erkannt werden bzw. eine entsprechende Unterbrechung des Magnetfelds erfasst werden.

Alternativ oder zusätzlich zu einer solchen magnetisch arbeitenden Ausbildung des Indikatorprofils und der zugehörigen Erfassungsmittel könnten Veränderungen des genannten Indikatorprofils ggf. auch anders überwacht und auf andere Überwachungsprinzipien zurückgegriffen werden. Beispielsweise könnte das Indikatorprofil elektrisch leitend ausgebildet und mit entsprechend ausgebildeten Erfassungsmitteln die elektrische Leitfähigkeit des Prüfseils bzw. des darin vorgesehenen Indikatorprofils überwacht werden. Alternativ oder zusätzlich könnte auch eine thermische Leitfähigkeit des genannten Indikatorprofils überwacht werden, wobei hier vorteilhafterweise das Indikatorprofil aus einem thermisch gut leitenden Material, beispielsweise aus einem Silberdraht ausgebildet ist.

Vorteilhafterweise ist das genannte Indikatorprofil, das in dem Prüfseil eingebettet ist und aus einem anderen Material als die Seilfasern besteht, hinsichtlich seiner Widerstandsfähigkeit gegen Seilspannungen, Dehnung, Zug, Biegung, Torsion, UV-Strahlung, Wasseraufnahme und/oder Temperatur schwächer als das Prüfseil ausgebildet derart, dass das Indikatorprofil deutlich schneller versagt als das Prüfseil bzw. dessen Faserstränge. Hierdurch ist sichergestellt, dass rechtzeitig eine Veränderung des Indikatorprofils feststellbar ist, bevor ein Versagen des Prüfseils auftritt. Ein Bruch des genannten Indikatorprofils hat noch keine nennenswerte Auswirkung auf die Festigkeit des Prüfseils selbst, kann jedoch leicht bestimmt werden und rechtzeitig vor dem Auftreten des Versagens des Seils erfasst werden.

In Weiterbildung der Erfindung überwacht die Erfassungseinrichtung, in welchem Seilabschnitt eine Veränderung des Seils, die zur Bestimmung der Ablegereife herangezogen wird, auftritt, um den verschlissenen bzw. schadhaften Seilabschnitt identifizieren und ggf. das restliche Seil noch weiter benutzen zu können, beispielsweise indem der schadhafte Teil abgetrennt wird. In Weiterbildung der Erfindung können den vorgenannten Erfassungsmitteln Seilweg- und/oder - positionserfassungsmittel zugeordnet sein, die den zurückgelegten Seilweg bzw. die Position des auf Veränderungen hin überwachten Seilabschnitts bestimmen. Insbesondere können die genannten Seilweg- bzw. -positionserfassungsmittel eine Seilwindenstellung oder -position erfassen, die gegeben ist, wenn der auf Veränderungen hin zu untersuchende Seilabschnitt gerade im Bereich der entsprechenden Erfassungseinrichtung ist und auf Veränderungen hin tatsächlich überwacht wird. Aus der genannten Seilwindenstellung kann dann in der Auswerteeinrichtung rückgerechnet werden, welcher Seilabschnitt schadhaft bzw. verschlissen ist.

Nach einem weiteren vorteilhaften Aspekt der vorliegenden Erfindung kann alternativ oder zusätzlich zu der genannten magnetinduktiven Überwachung eines eingebetteten Indikatorprofils auch eine Längung des Prüfseils überwacht und zur Bestimmung der Ablegereife herangezogen werden. Die Überwachung der Längung des Prüfseils geht von der Überlegung aus, dass ein zunehmender Verschleiß bzw. Schaden am Prüfseil bzw. die Annäherung an die Ablegereife mit einer Längung des Prüfseils gegenüber dessen Ursprungszustand einhergeht, so dass die Überwachung der Längung des Prüfseils als Indikator für die Ablegereife genutzt werden kann. Die Erfassungseinrichtung kann hierzu Bestimmungsmittel zur Bestimmung der Längung des Prüfseils aufweisen, wobei die Auswerteeinheit die bestimmte Längung mit einer zulässigen maximalen Längung abgleicht. Sobald die Längung ein vorbestimmtes Maß überschreitet, kann die Ablegereife angezeigt werden.

Bei der Bestimmung der Längung kann hierbei verschieden vorgegangen werden. Insbesondere kann in einem ersten Betriebsmodus die Längung des im Wesentlichen gesamten unter Belastung stehenden Seils bzw. Seilabschnitts bestimmt und überwacht werden. Alternativ oder zusätzlich kann in einem zweiten Betriebsmodus die Längung des Prüfseils abschnittsweise überprüft werden dahingehend, ob und inwieweit sich vorbestimmte Abschnitte des Prüfseils längen.

Nach einer vorteilhaften Ausführung der Erfindung können die Bestimmungsmittel zur Bestimmung der Längung einen Positionssensor zur Erfassung der Position eines vorbestimmten Seilabschnitts sowie einen Seilwindenstellungssensor zur Erfassung der beim Anfahren der vorbestimmten Seilposition sich einstellenden Windenstellung aufweisen. Der genannte Positionssensor kann beispielsweise erfassen, wenn ein oberer Abschaltpunkt für den Lasthaken erreicht wird und/oder wenn ein am Seil angebrachter Signalgeber beispielsweise in Form einer Markierung eine vorbestimmte Stelle entlang des Seilwegs erreicht. Der Seilwindenstellungssensor erfasst die in diesem Moment bzw. bei Erreichen der genannten Position herrschenden Seilwindenstellung, so dass die Auswerteeinheit die Seillängung aus einer Veränderung der sich einstellenden Windenstellung bestimmen kann. Weicht die Windenstellung bei Erreichen der vorbestimmten Position des vorbestimmten Seilpunkts zu weit von einer Sollstellung ab, kann die Ablegereife angenommen bzw. ein Ablegesignal abgegeben werden.

Alternativ oder zusätzlich kann das Prüfseil über seine Länge verteilt mit mehreren Signalgebern beispielsweise in Form von Markierungen, Transpondern, Signalreflektoren oder dergleichen versehen und somit in mehrere Längenabschnitte unterteilt sein. Die Bestimmungsmittel zur Bestimmung der Seillängung bestimmen den Abstand zwischen jeweils zwei Signalgebern, woraus die Auswerteeinheit die Längung der entsprechenden Seilabschnitte bestimmen und auf Veränderungen hin überwachen kann. Treten in einem oder mehreren Seilabschnitten Längungen auf, die einzeln oder in ihrer Summe betrachtet über einen jeweiligen Grenzwert für die zulässige Längung hinausgehen, kann die Auswerteeinheit ein Ablegesignal abgeben.

In Weiterbildung der Erfindung kann die genannte Erfassungseinrichtung hierbei derart ausgebildet sein, dass eine beispielsweise elektronische Messeinrichtung an einem bestimmten Punkt entlang des Seilwegs das Vorbeikommen bzw. Auftreten des genannten Signalgebers erfasst und den Längenabstand bis zum nächsten Signalgeber bei vorzugsweise konstanter Seilgeschwindigkeit misst. Hierdurch kann die Seillänge auf beliebige Messpunkte und in beliebige Seilabschnitte aufgeteilt bzw. unterteilt werden, so dass der Dehnungsverlauf des Seiles über die gesamte Seillänge bestimmt werden kann und in der Auswerteeinrichtung ausgewertet werden kann, in welchem Seilabschnitt der Grenzwert erreicht wurde und das Seil ausgetauscht werden muss, oder, wenn möglich, um den Ablegebereich, d.h. den überdehnte Seilbereich gekürzt werden muss.

Vorteilhafterweise wird die Prüfung auf Längung unter vorgegebenen Randbedingungen, insbesondere vorbestimmter Seillast, beispielsweise durch Anhängen einer Prüflast durchgeführt, um eine Varianz der Prüfergebnisse aufgrund variierender Randbedingungen zu eliminieren.

Alternativ oder zusätzlich zu der genannten Überwachung der Längung des Prüfseils und/oder zu der genannten Veränderung eines eingebetteten Indikatorprofils kann nach einem weiteren vorteilhaften Aspekt der vorliegenden Erfindung eine Veränderung des Seilquerschnitts überwacht und als Indikator für die Ablegereife genutzt werden. Insbesondere kann die Erfassungseinrichtung zur Erfassung von Seilveränderungen Querschnittsbestimmungsmittel zur Bestimmung des Seilquerschnitts, insbesondere der Seilquerschnittsfläche, aufweisen, wobei die Auswerteeinheit den bestimmten Seilquerschnitt, insbesondere die bestimmte Seilquerschnittsfläche, auf Veränderungen hin überwacht.

Der Seilquerschnitt kann hierbei grundsätzlich in verschiedener Art und Weise erfasst werden. Vorteilhafterweise können die genannten Seilquerschnittsbestimmungsmittel Durchmessererfassungsmittel zur Erfassung des Seildurchmessers in zumindest zwei verschiedenen Ebenen umfassen und die Seilquerschnittsfläche aus den genannten zwei bestimmten Seildurchmessern bestimmen. Grundsätzlich wäre es zwar auch denkbar, die Seilquerschnittsfläche aus nur einem Seildurchmesser, der in einer Ebene bestimmt wurde, zu ermitteln bzw. abzuleiten. Vorteilhafterweise jedoch wird der Seilquerschnitt bzw. die Seilquerschnittsfläche aus zwei Seildurchmessern bestimmt, die in verschiedenen, näherungsweise senkrecht zueinander stehenden Ebenen bestimmt wurden, da hierdurch für die Festigkeit des Prüfseils unschädliche Querschnittsveränderungen bzw. -verformungen berücksichtigt und vorschnelle Verschleißannahmen vermieden werden können. Hochfeste Prüfseile zeigen unter Querbelastungen, wie sie beispielsweise an Seilrollen oder an der Seilwinde auftreten können, ovalisierende Querschnittsveränderungen, d.h. der im Ausgangszustand an sich kreisrunde Querschnitt verändert sich zu einem flachgedrückten Profil hin, was an sich noch nicht schädlich für die Haltbarkeit bzw. Festigkeit des Prüfseils ist. Verändert sich der Seilquerschnitt jedoch derart, dass die Querschnittsfläche abnimmt, wird dies vorteilhafterweise als ein Anzeichen für einsetzenden Verschleiß angesehen. Insbesondere kann die Auswerteeinrichtung ein Ablegesignal bereitstellen, wenn der Seilquerschnitt eine vorbestimmte Verjüngung zeigt bzw. eine Verkleinerung der Seilquerschnittsfläche ein vorbestimmtes Maß überschreitet.

Die Durchmesserbestimmung kann hierbei in verschiedener Art und Weise erfolgen. Beispielsweise könnte eine optische Abtastung mittels einer Lichtbestrahlung und einem zugeordneten Sensor zur Erfassung der Schattenbreite vorgesehen sein. In vorteilhafter Weiterbildung der Erfindung jedoch erfolgt eine mechanische Abtastung des Seils von gegenüberliegenden Seiten her, um den Seildurchmesser zu bestimmen. Vorzugsweise kann zumindest ein elastisch vorspannbares Klemmmittelpaar, vorzugsweise in Form von gegen das Seil drückbaren Seilrollen vorgesehen sein, denen ein Abstandsmesser zugeordnet ist, um den Abstand der Klemmmittel voneinander im an das Seil angelegten Zustand zu messen.

Um die Durchmesserbestimmung nicht durch Auslenkungen des Seils zu beeinträchtigen, können die genannten Abtastmittel beweglich aufgehängt sein, so dass sie im an das Seil angelegten Zustand Seilbewegungen, insbesondere Seilquerbewegungen, mitmachen können. Insbesondere können die vorgenannten vorspannbaren Klemmmittel in Form der Seilrollen einerseits relativ zueinander sowie andererseits gemeinsam quer und/oder parallel zur Seillängsrichtung bewegt werden, um auch bei ungewollten Seilauslenkungen exakt den Seildurchmesser bestimmen zu können.

Vorteilhafterweise erfolgt die Seilmessung in mindestens zwei Ebenen, um Abweichungen des Seilquerschnitts von der Kreisform bei der Bestimmung der Querschnittsfläche eliminieren zu können. Hierfür können beispielsweise zwei Seilrollenpaare vorgesehen sein, die in zueinander senkrechten Ebenen angeordnet sind und jeweils elastisch gegeneinander spannbar sind.

Nach einer vorteilhaften Weiterbildung der Erfindung kann für die Bestimmung der Ablegereife des Prüfseils auch das auf das Seil wirkende Lastkollektiv herangezogen werden, insbesondere die auf das Seil wirkenden Zugbeanspruchungen und die auf das Seil einwirkenden Biegewechsel. Hierzu kann ein Lastkollektivzähler vorgesehen sein, der als auf das Prüfseil einwirkende Lastkollektiv zumindest die Seilzugbelastung und die Biegewechselanzahl erfasst. Die Ermittlung und Auswertung der genannten Messdaten ist über entsprechende Bestimmungsmittel bzw. Erfassungsmittel oder Sensoren möglich, deren Messdaten in der Auswerteeinrichtung verarbeitet und ausgewertet werden. Insbesondere kann ein Lastsensor die laufende Belastung des Seils über die Betriebszeit des Seils erfassen. Zur Bestimmung der Biegewechsel kann ein Drehwegsensor auf der Trommel der Seilwinde die Seillänge bestimmen, die beansprucht wird. In der Auswerteeinrichtung können die Lastdaten und die Seilweg- bzw. Biegewechseldaten miteinander verknüpft werden, um ein Lastkollektiv zu bestimmen, das mit einem vorbestimmten, zulässigen maximalen Lastkollektiv verglichen werden kann. Wird die Anzahl des maximal zulässigen Lastkollektivs erreicht, kann die Auswerteeinheit ein entsprechendes Ablegesignal ausgeben.

Bei der rechnerischen Bestimmung der auf das Seil wirkenden Lastkollektive kann grundsätzlich auf verschiedene analytische Ansätze zurückgegriffen werden. Hierbei kann von der Überlegung ausgegangen werden, aufgrund einer rechnerischen Akkumulation von Schädigungen bei verschiedenen Lastkollektiven auf unterschiedliche Schädigungsgrade zu schließen und diese im Steuerungssystem zu hinterlegen. Hierdurch kann bei einer bestimmten Vorgabe an Lastwechseln rechnerisch auf die hierdurch entstehenden Seilschädigungen geschlossen werden, wobei ein Grenzwert festgelegt werden kann, welcher eine Einschätzung der Ablegereife zulässt.

Beispielsweise kann bei der Auswertung der auftretenden Lastkollektive ein Zählverfahren eingesetzt werden, wobei beispielsweise die Amplitude der auftretenden Lasten über deren Summenhäufigkeit dargestellt werden kann. Da im Normalfall das Prüfseil nicht nur einer immer wiederkehrenden, gleichen Belastung mit konstanter Amplitude, sondern einer in ihrer Höhe veränderlichen Belastung unterliegt, kann das sich in der Praxis ergebende Belastungskollektiv beispielsweise in einzelne Rechteckkollektive mit jeweils konstanter Belastung und einer Teilbelastungsspielzahl unterteilt bzw. getreppt werden. Beispielsweise nach dem an sich bekannten Verfahren der linearen Schadenakkumulation kann hierbei nun für jedes Teilkollektiv eine Teilschädigung berechnet werden, indem die Teilbelastungsspielzahl durch die maximal ertragbare Belastungsspielzahl geteilt wird. Die sich so ergebenden Teilschädigungen aller Teilkollektive können aufsummiert und als Angabe der Gesamtschädigung des Prüfseils verwendet werden. In an sich ebenfalls bekannter Weise kann dieser Ansatz der linearen Schadensakkumulation auch in verschiedener Weise modifiziert werden, beispielsweise dahingehend, dass Teilkollektive, deren Lastamplituden unterhalb der Dauerfestigkeitsgrenze liegen nicht oder nur begrenzt berücksichtigt werden.

In Weiterbildung der Erfindung kann die Überwachung der vorgenannten Veränderungen des Prüfseils, insbesondere die magnetische Veränderung eines Indikatorprofils, die Veränderung der Seillängung und/oder die Veränderung des Seildurchmessers zur Festlegung entsprechender Kenngrößen erfolgen. Insbesondere können die entsprechenden Referenzwerte für die entsprechenden Kenngrößen, insbesondere die magnetische Leitfähigkeit bzw. Eigenschaft des Indikatorprofils, die ursprüngliche Seillänge oder die Seilquerschnittsfläche, am Seilprüfstand festgelegt bzw. ermittelt werden. Im weiteren Betrieb des Krans bzw. Hebezeugs werden die genannten Kenngrößen sodann laufend bzw. zyklisch überwacht und mit den am Seilprüfstand bestimmten Referenzwerten hierfür verglichen. Zeigt einer oder mehrere der genannten Kenngrößen eine Abweichung gegenüber dem entsprechenden Referenzwert, die ein zulässiges Abweichungsmaß überschreitet, kann die Kransteuerung ein Ablegesignal bereitstellen.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Darstellung eines Seilprüfstands nach einer vorteilhaften Ausführung der Erfindung, wobei ein Prüfseil von einem Prüfseilantrieb her und ein Sicherheitsseil von einem Zusatzseilantrieb her über separate Seileinscherungen zu einer Prüflast geführt sind, so dass die Prüflast wahlweise durch das Prüfseil alleine oder das Sicherheitsseil alleine oder gemeinsam durch das Prüfseil und das Sicherheitsseil angehoben und abgesenkt werden kann, um changierende Lasten am Prüfseil zu erzeugen,
- Fig. 2:: eine schematische Darstellung des Seilprüfstands aus Fig. 1 in einem anderen Rüstzustand, in dem das Prüfseil sowohl auf den Prüfseilantrieb als auch auf den Zusatzseitantrieb und zwischen den beiden Seilantrieben über eine Einscherung zur Prüflast geführt ist, so dass das Prüfseil von dem einen Seilantrieb zu dem anderen Seilantrieb und umgekehrt hin- und hergespult werden kann,
- Fig. 3:: eine schematische Darstellung von Erfassungsmitteln des Seilprüfstands aus den vorhergehenden Figuren zur magnetinduktiven Überwachung von Veränderungen eines in das Prüfseil eingebetteten Indikatorprofils,
- Fig. 4:: eine schematische Darstellung von Erfassungsmitteln des Seilprüfstandes aus den Figuren 1 und 2 zur Erfassung einer Längung des Prüfseils, und
- Fig. 5:: eine schematische Darstellung von Erfassungsmitteln zur Erfassung von Querschnittsveränderungen des Prüfseils an dem Seilprüfstand aus den Figuren 1 und 2.

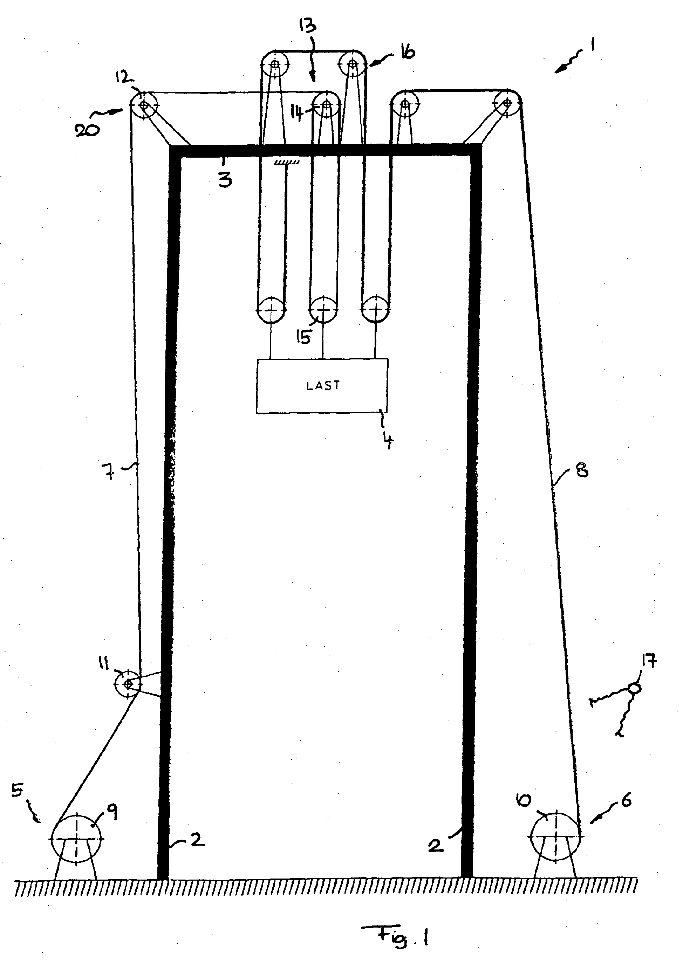

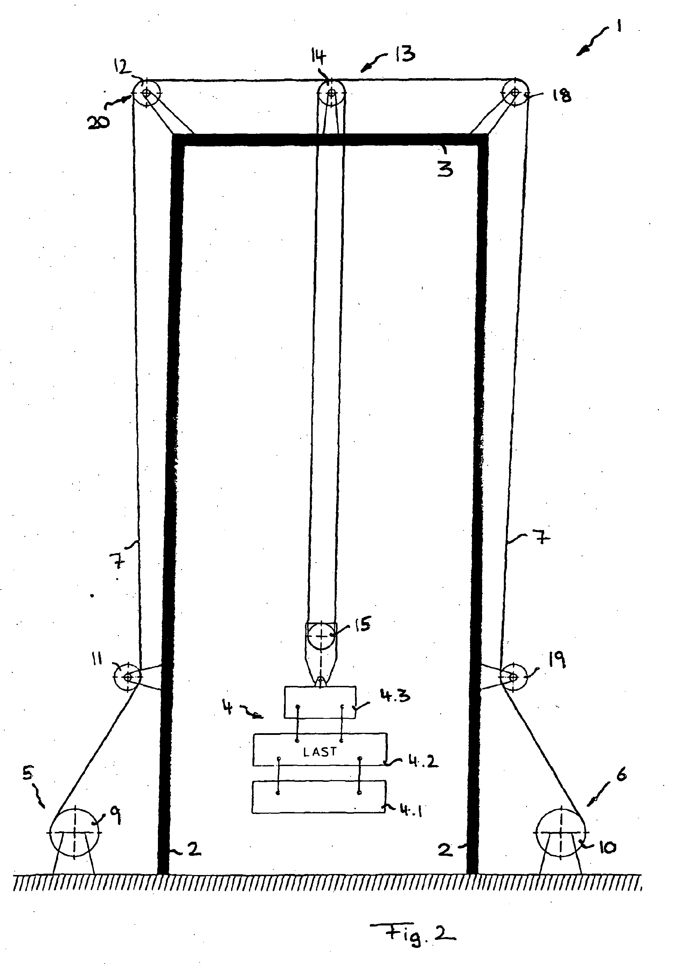

Wie Fig. 1 und 2 zeigen, kann der Seilprüfstand 1 als Portal ausgeführt sein und zwei senkrecht, vorteilhafterweise begehbare Türme 2 umfassen, die in einem Fundament fest verankert sind und im oberen Bereich durch eine Trägerkonstruktion 3 verbunden sind. In der Mitte zwischen den Türmen 2 befindet sich eine Prüflast 4, die zwischen den Türmen 2 unter der genannten Trägerkonstruktion 3 auf- und abgefahren werden kann.

Vorteilhafterweise am Boden und/oder im Fundamentbereich der Türme 2 befindet sich an jedem Turm 2 vorteilhafterweise gegenüberliegend auf der Turmaußenseite, um den Arbeitsbereich nicht zu beeinträchtigen, jeweils ein Seilantrieb, wobei in der Fig. 1 auf der linken Seite der Prüfseilantrieb 5 und auf der rechten Seite der Zusatzseilantrieb 6 vorgesehen ist.

Anstelle der in Fig. 1 gezeigten Ausführung kann anstelle von zwei Türmen 2 jedoch auch nur ein Turm vorgesehen sein, der mit einem Kragträger an seinem oberen Ende versehen ist, an dem dann die Prüflast eingeschert ist. Die Winden können hierbei gegenüberliegend zum Kragträger am Boden angeordnet sein, um in entsprechender Weise die Verseilung über den Kragträger zur Prüflast und zu den Winden zu führen.

Wie Fig. 1 zeigt, kann in einem ersten Prüfungsmodus ein Prüfseil 7 von der Winde 9 des Prüfseilantriebs 5 über Umlenkrollen 11 und 12 und eine Seileinscherung 13, die einfach oder mehrfach ausgebildet sein kann, zur Prüflast geführt sein. Die genannte Seileinscherung 13 kann hierbei ein einfach oder mehrfach eingeschertes Rollenpaket 14 und 15 umfassen, das einerseits an dem genannten Portalträger und andererseits an der Prüflast vorgesehen ist.

Von der Winde 10 des Zusatzseilantriebes 6 ist ein Sicherheitsseil 8 über eine separate Seileinscherung 16 ebenfalls zur genannten Prüflast 4 geführt. Das besagte Sicherheitsseil 8 dient einerseits zur Lastabsturzsicherung, wenn das Prüfseil 7 reißt, jedoch ebenfalls auch zur Lastaufnahme und Lastbewegung, je nach Versuchsart und Versuchsmodus für das Prüfseil 7. Die Sicherheit des Sicherheitsseils 8 ist vorteilhafterweise deutlich höher gewählt als die Sicherheit des Prüfseiles 7 in Bezug zur Bruchlast, so dass in jedem Fall sichergestellt ist, dass es zuerst das Prüfseil 7 ist, welches reißt, und in jedem Fall die Prüflast 4 bei reißendem Prüfseil 7 vom Sicherheitsseil 8 abgefangen wird.

Die Winden 9 und 10 des Prüfseilantriebs 5 und des Zusatzseilantriebs 6 werden vorteilhafterweise von Elektromotoren angetrieben, die über einen Frequenzumrichter hinsichtlich Drehzahl und Drehmoment variable und präzise gesteuert werden können, um durch das Zusammenspiel der beiden Seilantriebe die gewünschte Seillast am Prüfseil 7 einstellen zu können. Die Prüfseil- und Zusatzseilantriebe 5 und 6 werden hierbei vorteilhafterweise von einer elektronischen Steuerungsvorrichtung 17 in aufeinander abgestimmter Weise angesteuert, um die auf das Prüfseil 7 wirkende Last variabel einstellen zu können.

Insbesondere können mittels der separat antreibbaren Prüf- und Sicherheitsseile 7 und 8 folgende Lastzustände bzw. Belastungszyklen für das Prüfseil 7 gefahren werden:
- Heben und Senken der Prüflast 4 unter Volllast des Prüfseils 7. Hierbei wird der Zusatzseilantrieb 6 mit nur einem sehr geringen Seilzug gefahren, so dass das Sicherheitsseil 8 im Wesentlichen nur nachgeführt wird.
- Heben mit Volllast des Prüfseils 7 und Senken ohne Last des Prüfseils 7. Hierzu wird die Prüflast in der obersten Position von dem Prüfseilantrieb 5 an den Zusatzseilantrieb 6 übergeben. Das Anheben erfolgt allein durch den Prüfseilantrieb 5, während das Absenken allein durch den Zusatzseilantrieb 6 erfolgt.
- Heben ohne Last des Prüfseils 7 und Senken mit Volllast des Prüfseils 7. Die Prüflast 4 wird hierbei alleine durch den Zusatzseilantrieb 6 angehoben, der in oberster Position die Last auf den Prüfseilantrieb 5 übergibt. Beim Heben wird der Prüfseilantrieb 5 lediglich nachgeführt, so dass das Prüfseil ohne Last aufgespult wird, während beim Senken das Sicherheitsseil 8 zugkraftfrei bzw. unter sehr geringem Widerstand abgezogen wird.
- Die Übergabe der Prüflast 4 von dem Prüfseilantrieb 5 auf den Zusatzseilantrieb 6 oder umgekehrt von dem Zusatzseilantrieb 6 auf den Prüfseilantrieb 5 kann in unterschiedlicher Hubhöhe der Prüflast 4 vorgesehen werden.
- Die Belastung des Prüfseilantriebs 5 kann auch während einem Hub- oder Senkvorgang durch Variieren der zugeschalteten Zugkraft des Zusatzseilantriebes 6 variabel erhöht oder abgesenkt werden, beispielsweise um die Seilbelastung eines Seiltriebs eines Verstellauslegers zu simulieren.

Vorteilhafterweise wird von der Steuerungseinrichtung 17 dann, wenn der Prüfseilantrieb 5 mit Volllast gefahren wird, der Zusatzseilantrieb 6 nur mit geringem Seilzug gefahren, der für eine gute Seilwicklung erforderlich ist. Umgekehrt wird vorteilhafterweise dann, wenn der Zusatzseilantrieb 6 mit Volllast gefahren wird, der Prüfseilantrieb 5 nur mit geringer Last bzw. geringem Seilzug gefahren, um eine Seilwicklung auf der Winde 9 des Prüfseilantriebs 5 sicherzustellen.

Unabhängig davon, welcher Prüfmodus gefahren wird, übernimmt der Zusatzseilantrieb 6 und das Sicherheitsseil 8 immer die volle Absicherung, so dass es zu keinem Lastabsturz bei Bruch des Prüfseils 7 kommen kann. Vorteilhafterweise kann die Winde 10 des Prüfseilantriebs 5 hierbei eine zusätzliche Sekundärbremse auf der Trommel besitzen. Vorteilhafterweise werden die Seilzüge und die Lastgeschwindigkeit von der Steuerungseinrichtung 17 durch geeignete Sensoren oder Erfassungsmittel überwacht. Bei Überschreitung der zulässigen Werte erfolgt vorteilhafterweise automatisch eine Stillsetzung des Prüfstands.

Wie Fig. 2 zeigt, kann das Prüfseil 7 gemäß einem anderen Prüfmodus an dem Seilprüfstand 1 auch in einer anderen Aufspannung gefahren werden. Insbesondere kann das Prüfseil 7 von der Winde 9 des Prüfseilantriebes 5 her kommend über das Umlenksystem mit den Umlenkrollen 11 und 12 und die Seileinscherung 13, die wiederum ein einfach oder mehrfach eingeschertes Rollenpaket 14 und 15 umfassen kann, über weitere Umlenkrollen 18 und 19 auf die Winde 10 des Zusatzseilantriebes 6 geführt sein. Die genannte Winde 10 des Zusatzseilantriebes 6 kann hierbei die in Fig. 1 gezeigte Winde sein, von der das Sicherheitsseil abgespult wird. Es kann jedoch auch eine zusätzliche Winde bzw. ein zusätzlicher Zusatzseilantrieb vorgesehen sein, so dass die verschiedenen Prüfungsmodi ohne Umrüsten bzw. Umspulen des Seils erfolgen kann. Zur Realisierung der vorgenannten Prüfungszyklen, die in Verbindung mit Fig. 1 beschrieben sind, braucht dann lediglich der eine Zusatzantrieb, auf den das Prüfseil aufgespult ist, stillgesetzt werden, so dass mit dem Zusatzseilantrieb für das Sicherheitsseil gearbeitet wird, während umgekehrt für die Prüfungsmodi gemäß Fig. 2 das Sicherheitsseil lediglich nachgeführt wird. Es kann jedoch bei den Prüfungsmodi gemäß Fig. 2 jedoch auch ohne Sicherheitsseil gearbeitet werden, da vorteilhafterweise die Prüflast 4 nur ganz gering angehoben werden muss, so dass ein Absturz bei Seilbruch keine schwerwiegenden Folgen haben kann.

Wie Fig. 2 zeigt, kann das Prüfseil 7 durch die beiden Prüfseil- und Zusatzseilantriebe 5 und 6 mit einem oder beiden der genannten Antrieben geringfügig über den Boden in die Schwebe gebracht werden. In diesem Zustand kann das Prüfseil 7 von der einen Winde 9 auf die andere Winde 10 und/oder umgekehrt hin- und hergespult werden, wobei die volle Prüflast 4 auf das Prüfseil 7 einwirkt. Die Spulung der maximalen Seillänge ist hierbei vorteilhafterweise von der Höhe des Seilprüfstandes 1 unabhängig und im Wesentlichen lediglich nur von der Seilspeichermöglichkeit der Trommeln abhängig. Hierdurch kann das Seilspulverhalten insbesondere im Mehrlagenbetrieb auf der Trommel geprüft werden.

Weiterhin können aber auch verschiedene Lastzyklen gefahren werden, insbesondere dadurch, dass für einzelne Spulvorgänge oder Abschnitte eines Spulvorgangs die Prüflast 4 ganz oder teilweise auf den Boden abgesetzt wird. Vorteilhafterweise kann die Prüflast 4 hierbei aus mehreren Teillasten zusammengesetzt sein, so dass je nachdem, wie viele Teillasten auf dem Boden abgesetzt werden, unterschiedliche Lastzustände am Prüfseil 7 generiert werden können. Wie Fig. 2 zeigt, kann die Prüflast 4 hierbei vorteilhafterweise zumindest zwei, vorteilhafterweise drei oder mehr Teillasten 4.1, 4.2 und 4.3 umfassen, die vorteilhafterweise untereinander kettenartig miteinander verbunden sind. Die Verbindung der Teillasten miteinander ist hierbei vorteilhafterweise derart ausgebildet, dass dann, wenn eine Teillast am Boden abgesetzt ist, die unmittelbar darüber befindliche Teillast noch vom Boden und/oder der darunter liegenden Teillast beabstandet ist. Zwischen den Teillasten ist also vorteilhafterweise Spiel vorgesehen, welches es ermöglicht, auch ohne zu exaktes Festlegen einer bestimmten Hubhöhe einzelne oder mehrere Teillasten am Boden abzusetzen, während die andere Teillast oder die anderen Teillasten noch in der Schwebe gehalten sind. Beispielsweise können die Teillasten mittels biegeelastischen oder biegeschlaffen Zugmitteln wie beispielsweise Seilen oder Ketten oder Riemen aneinander angehängt sein. Alternativ oder zusätzlich können die Verbindungsmittel auch verschieblich oder in anderer Weise positionsveränderbare Anlenkpunkte umfassen, beispielsweise derart, dass Zugstangen an einem ihrer Enden in einer längsnutartigen Anlenkvorrichtung begrenzt verschieblich geführt sind.

Vorteilhafterweise lassen sich von der Steuerungsvorrichtung 17 folgende Prüfungsmodi durchführen:
- Ein Seilspulvorgang unter Volllast von der Winde 9 des Prüfseilantriebs 5 zur Winde 10 des Zusatzseilantriebs 6 und in umgekehrter Richtung ebenfalls unter Volllast. Das Prüfseil hat hierbei immer die volle Belastung durch die schwebende Prüflast 4. Ein entsprechender Seilspulvorgang unter Last ist auch mit einer Teillast möglich, dadurch, dass die Teillast 4.1 und/oder die Teillast 4.2 am Boden abgesetzt und lediglich noch die Teillast 4.3, ggf. zusammen mit der Teillast 4.2 in der Schwebe gehalten wird.
- Ein Seilspulvorgang unter Vollast von der Winde 9 des Prüfseilantriebs 5 zur Winde 10 des Zusatzseilantriebs 6 und eine Rückspulung von der Winde 10 des Zusatzseilantriebs 6 zur Winde 9 des Prüfseilantriebs 5 ohne Last. Für das Rückspulen ohne Last werden hierbei vorteilhafterweise die Teilprüflasten 4.1 und 4.2 am Boden abgesetzt und nur die oberste Teilprüflast 4.3 in der Schwebe gehalten, um einen Mindestseilzug für ausreichend gutes Aufspulen sicherzustellen.
- Ein Seilspulvorgang ohne Last von der Winde 9 des Prüfseilantriebs 5 zur Winde 10 des Zusatzseilantriebs 6 und ein Rückspulen in umgekehrter Richtung von der Winde 10 des Zusatzseilantriebs 6 zur Winde 9 des Prüfseilantriebs 5 unter Volllast oder Teillast. Für den genannten Spulvorgang ohne Last wird vorteilhafterweise wieder lediglich die oberste Teillast in der Schwebe gehalten, um einen für das Aufspulen notwendigen Seilzug sicherzustellen.
- Die Belastungswechsel durch Absetzen einer oder mehrerer Teillasten oder das Anheben einer oder mehrerer zusätzlicher Teillasten kann bei unterschiedlicher Seilwickellänge und bei unterschiedlichen Prüflasten durch unterschiedliche Anzahlen an abgesetzten Teillasten erfolgen, wodurch variierende Lastspiele für unterschiedliche Prüfseilabschnitte und/oder mit unterschiedlichen Lasten gefahren werden können.

Um für die Ablegereife relevante Kenngrößen des genannten Prüfseils überwachen bzw. erfassen zu können, ist eine Erfassungseinrichtung 102 vorgesehen, die am Seilprüfstand angeordnet sein kann und zusammen mit einer Auswerteeinrichtung 103, die die erfassten Kenngrößen auswertet, mit der elektronischen Seilprüfstandsteuereinheit 131 verbunden oder in diese integriert sein kann.

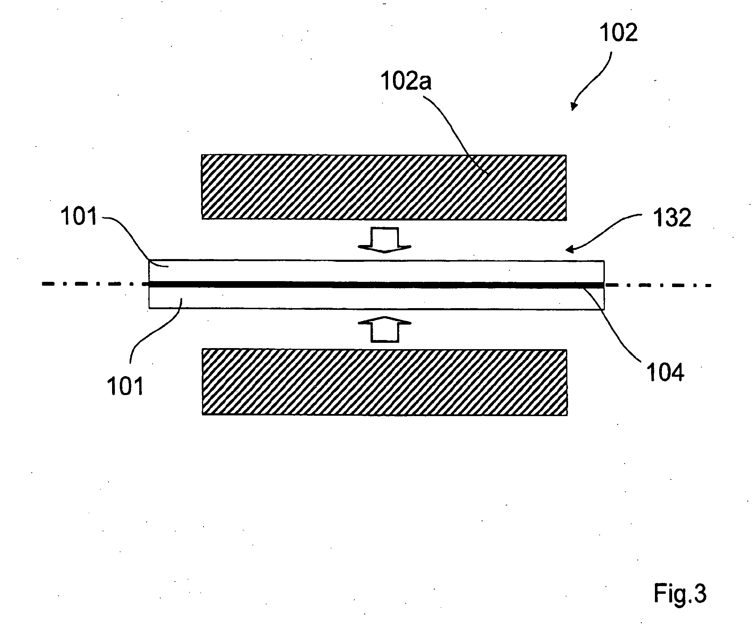

Wie die Figuren 3-5 zeigen, umfasst die genannte Erfassungseinrichtung 102 hierbei vorteilhafterweise verschiedene Erfassungsmittel, um verschiedene Kenngrößen des Prüfseils 101 in unterschiedlicher Weise zu erfassen. Gemäß Fig. 3 kann die genannte Erfassungseinrichtung 102 magnetisch arbeitende Erfassungsmittel 102a umfassen, die Veränderungen eines in das Prüfseil 101 eingebetteten Indikatorprofils 104 erfassen, das magnetisch leitend bzw. ein Magnetfeld beeinflussend bzw. magnetisierbar ausgebildet ist und mit verseilt sein kann. Beispielsweise kann das genannte Indikatorprofil 104 im Kern in der Litze oder dazwischen angeordnet sein, wobei das genannte Indikatorprofil 104 selbst grundsätzlich beliebige Querschnittsformen besitzen kann, vorteilhafterweise mit einem runden Querschnitt versehen sein kann. Insbesondere kann das genannte Indikatorprofil 104 aus einem metallischen Endlosmaterial wie beispielsweise einem Draht geformt sein, wobei das Indikatorprofil 104 vorteilhafterweise derart beschaffen ist, dass es gegenüber Seilbelastungen, Dehnungen, Zug, Biegung, Torsion, Temperatur und anderen relevanten Eigenschaften weniger widerstandsfähig ausgelegt ist als die Fasern des Prüfseils 101 bzw. das Prüfseil 101 selbst, so dass das Indikatorprofil 104 versagt, bevor es zu einem Versagen des Prüfseils 101 kommt.

Die genannten magnetischen Erfassungsmittel 102a, die beispielsweise einen Magnetfeldsensor umfassen können, erfassen die Veränderungen eines Magnetfelds, das auf das genannte Indikatorprofil 104 einwirkt oder von diesem erzeugt wird. Insbesondere ein Bruch des genannten Indikatorprofils 104 führt hierbei zu Veränderungen des genannten Magnetfelds 132, so dass aus der Erfassung der entsprechenden, charakteristischen Magnetfeldänderung auf einen Bruch des Indikatorprofils 104 und hieraus wiederum auf die Ablegereife des Prüfseils 101 geschlossen werden kann.

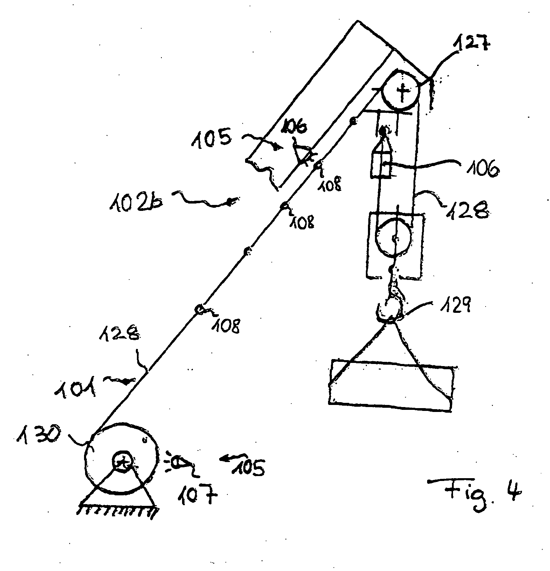

Um bestimmen zu können, in welchem Bereich des Prüfseils 101 der Bruch des Indikatorprofils 104 auftritt, kann der Erfassungseinrichtung 102 bzw. deren magnetischen Erfassungsmittel 102a eine Seilwegmessung zugeordnet sein, die durch geeignete Seilwegerfassungsmittel 105 bewerkstelligt wird, beispielsweise dadurch, dass ein der Seilwinde zugeordneter Drehstellungssensor 107, vgl. Fig. 4, die Drehstellung der Seilwinde angibt oder Positionssensoren 106, vgl. Fig. 4, gekennzeichnete Seilabschnitte an einer bestimmten Position erfassen, bei der bzw. denen die genannten magnetischen Erfassungsmittel 102a die Fehlstelle melden. Aus der bekannte Position der Erfassungsmittel 102a kann die Auswerteeinrichtung 103 exakt bestimmten, wo die Fehlstelle ermittelt wurde. Vorteilhafterweise wird aufgrund einer noch bestehenden Restlebensdauer des hochfesten Prüfseils der notwendige Zeitraum zum Austausch des Prüfseils 101 z.B. am Monitor der Seilprüfstandsteuerung angezeigt. Sollte es nicht zum Tausch in der vorgegebenen Zeit kommen, kann die Seilprüfstandsteuereinheit 131 den Seilprüfstand zur Sicherheit automatisch stilllegen.

Wie Fig. 4 zeigt, umfasst die vorgenannte Erfassungseinrichtung 102 vorteilhafterweise weiterhin Erfassungsmittel 102b zur Bestimmung einer im Betrieb nach und nach auftretenden Längung des Prüfseils 101. Hierbei kann mit dem Prüfseil 101 eine bestimmte Position angefahren werden, beispielsweise durch direktes Anfahren des oberen Abschaltpunktes, bei dem der Lasthaken 129 die höchstmögliche Position erreicht hat und was beispielsweise durch einen Endschalter oder einen anderen Positionssensor 106 erfasst werden kann. Meldet der genannte Positionssensor 106 den Erfassungsmitteln 102b, dass die vorbestimmte Seilposition erreicht ist, wird durch einen Seilwindenstellungssensor 107 die Stellung der Seilwinde erfasst bzw. bestimmt. Diese Messung wird zunächst bei der ersten Inbetriebnahme des Seilprüfstands durchgeführt. Stellt sich bei späteren Messungen eine andere Seilwindenposition ein, wenn die vorbestimmte Seilposition angefahren wird, ist die Abweichung der Seiltrommelstellung für das Anfahren desselben Seilpunktes ein Maß für die aufgetretene Längung des Prüfseils 101.

Bei dieser Methode der Erfassung der Seillängung durch Messung der zunehmenden Trommelumdrehung bis zum Abschaltpunkt ist zu beachten, dass es sich um einen Durchschnittswert der Seillängung handelt. Die Seildehnung ist abhängig von der Belastung und der Dauer der Belastung. Wird eine Last bewegt z.B. "Heben", so hat der Seilbereich, der nicht auf die Seiltrommel gespult immer die volle und längste Belastung, bis die Last wieder abgesetzt wird. Im Seilbereich, der auf die Trommel gespult wird, nimmt der Seilzug kontinuierlich ab und somit auch die Beanspruchung auf Dehnung. Somit wird die Dehnung des Seiles außerhalb der Seiltrommel ca. konstant verlaufen und immer die maximale Beanspruchung bekommen. Beim Seil, das auf die Trommel gespult wird, nimmt die bestehende Zuglast kontinuierlich ab, da die Seilbelastung auf Zug nach einigen Windungen auf ca. null abnimmt. Die Grenze der zulässigen Längung kann bei dieser Methode mit einem Dehnungsverteilfaktor in Bezug auf die gesamte Seillänge ermittelt werden, um eine ausreichende Sicherheit für den Zeitpunkt der Ablegereife des Prüfseils 101 zu erhalten.

Eine weitere Methode der Seillängungsprüfung bezüglich Ablegereife beruht auf Signalgebern 108 bzw. Indikatoren, die aktiv oder inaktiv Signale abgeben. Diese Indikatoren sind im Seil mit ca. gleichen Abständen fest integriert. Eine z.B. elektrisch-elektronische Messeinrichtung beispielsweise in Form eines Positionssensors 106 erfasst den Punkt des Indikators und misst den Längenabstand bis zum nächsten Indikator bei konstanter Seilgeschwindigkeit. Somit kann die Seillänge auf beliebige Messpunkte aufgeteilt werden und man erhält mit dieser Methode eine Auswertung über den Dehnungsverlauf des Seiles über die gesamte Seillänge und erkennt mit einer Messeinrichtung, in welchem Seilbereich der Grenzwert erreicht wurde.

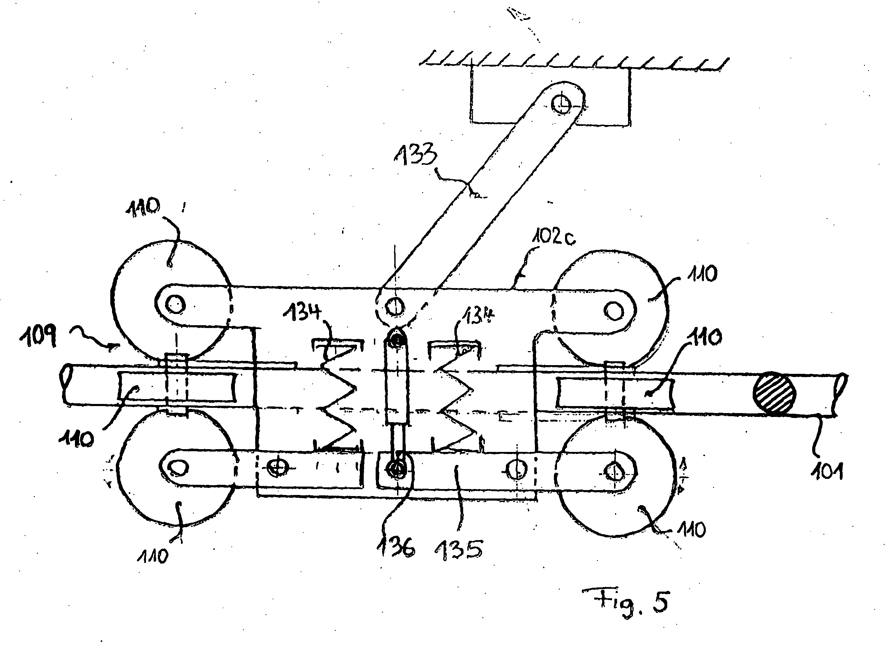

Wie Fig. 5 zeigt, kann die Erfassungseinrichtung 104 vorteilhafterweise auch Erfassungsmittel 102c zur Bestimmung von Veränderungen des Seilquerschnitts des Prüfseils 101 umfassen. Die genannten Erfassungsmittel 102c erfassen hierzu vorteilhafterweise in mindestens zwei Ebenen, die vorteilhafterweise zueinander senkrecht stehen können, den Seildurchmesser, um auch bei an sich noch unschädlichen Veränderungen der Seilquerschnittsform die Seilquerschnittsfläche aus den mehreren Seildurchmessern bestimmen zu können. Dies hat den Hintergrund, dass hochfeste Prüfseile 101 unter Querbelastungen wie sie an den Umlenkrollen 127 oder an den Seilwinden 125 bzw. 130 auftreten, zu einer Ovalisierung im Querschnitt neigt, die an sich noch keine Beeinträchtigung der Seilfestigkeit mit sich bringt. Kritisch wird es indes, wenn die Seilquerschnittsfläche abnimmt.

Bei der Ausführung nach Fig. 5 werden hierfür die Seildurchmesser in zueinander senkrechten Ebenen mittels Klemmmittelpaaren in Form von Seilrollen 110 mechanisch abgetastet, die von gegenüberliegenden Seiten her gegen die Oberfläche des Prüfseils 101 gedrückt werden, so dass die lichte Weite zwischen den Klemmmitteln in Form der Seilrollen 110 ein Maß für den entsprechenden Seildurchmesser ist.

Wie Fig. 5 zeigt, sind die Erfassungsmittel 102c insgesamt quer zur Seillängsrichtung beweglich gelagert, so dass Querbewegungen des Prüfseils 101 keine Auswirkungen auf das Messergebnis haben. In der gezeichneten Ausführung ist die gesamte Vorrichtung hierbei über einen Schwenkrahmen bzw. eine Hebelanlenkung 133 querbeweglich aufgehängt, vgl. Fig. 5.

Die Messeinrichtung besitzt vorteilhafterweise in einer Ebene mindestens zwei Rollen im Vorderen und zwei Rollen im hinteren Bereich, davon jeweils die untere Rolle über Federn 134 das Seil 101 leicht klemmt und somit den Seildurchmesser erfasst. Eine dieser unteren gefederten Rollen 110 besitzt eine Drehachse und einen Hebel 135 über den der gemessene Seildurchmesser auf einen Wegsensor 136 übertragen und somit ausgewertet wird. Die Messeinheit besitzt weitere seitliche Führungsrollen zum Seil, so dass die Messeinheit über das Seil geführt wird und eventuelle Seilschwingungen auf die Messwerte keinen Einfluss haben. Die Messeinheit ist über einen Hebel gelenkig zum Stahlbau des Seilprüfstandes aufgehängt, um Bewegungen auszugleichen. Die Seilmessung erfolgt vorteilhafterweise mindestens über zwei Ebenen des Seils um 90° versetzt, so dass der Seildurchmesser über vier Bereiche geprüft wird. Eine weitere versetzte Anordnung, z.B. für sechs Bereiche, ist möglich. Die Messung über 2 - 4 - 6 usw. Bereiche kann in einer Messeinheit konstruktiv vorgesehen werden, oder durch Anordnung mehrerer Messeinheiten.

Eine weitere Möglichkeit besteht durch Einsatz optischer Prüfgeräte, die eine Seildurchmesserveränderung bezogen auf den Umfang erkennen und auswerten. Bei Über- oder Unterschreitung der zulässigen Durchmesserabweichung wird ein Warnsignal gegeben und die Position gespeichert über den Trommeldrehzahlsensor 107.

Ferner kann die genannte Erfassungseinrichtung 102 vorteilhafterweise auch Erfassungsmittel 102d zur Erfassung des auf das jeweilige Prüfseil 101 einwirkenden Lastkollektivs aufweisen, wobei hier vorteilhafterweise zumindest die auf das Seil einwirkende Zuglast und die Anzahl der Blegewechsel, vorteilhafterweise aber auch andere die Dauerfestigkeit beeinflussenden Parameter wie mehrlagige Spulung, Umwelteinflüsse, Temperatur, Querbelastungen und anderes erfasst werden kann.

Zur Ermittlung der genannten Parameter umfassen die genannten Erfassungsmittel 102d entsprechende Sensoren, deren Signale in der genannten Auswerteeinheit 103 erfolgt. Insbesondere kann ein Lastmesssensor die laufende Belastung über die Betriebszeit des Seils erfassen. Vorteilhafterweise kann ferner ein Drehwegsensor auf der jeweiligen Windentrommel die Seillänge messen, die beansprucht wird. In der Summe kann hieraus ein Lastkollektiv beispielsweise in Form einer Wöhlerkurve bestimmt werden, das als maximales Lastkollektiv für das Prüfseil 101 vorgegeben werden kann.

## Patentansprüche

1. Seilprüfstand zur Prüfung eines Prüfseils (7) auf Lebensdauer, Ablegereife, zulässige Biegewechselzahl und/oder Spulverhalten, mit einem Umlenksystem (20) umfassend zumindest eine Umlenkrolle (11, 12; 18, 19) zur Umlenkung des Prüfseils (7), einem Prüfseilantrieb (5) zum Auf- und Abspulen des Prüfseils (7) über das Umlenksystem (20), und einer Prüflast (4) zur Belastung des Prüfseils (7), einen Zusatzseilantrieb (6) zum Auf- und Abspulen eines Sicherheitsseils (8) und/oder des Prüfseils (7), sowie einer Steuervorrichtung (17) zur Steuerung des Zusatzseilantriebs (6) und/oder des Prüfseilantriebs (5) in aufeinander abgestimmter Weise derart, dass die Belastung des Prüfseils (7) für unterschiedliche Prüfseilabschnitte und/oder unterschiedliche Spulrichtungen und/oder unterschiedliche Spulzyklen und/oder unterschiedliche Phasen eines Spulzyklus unterschiedlich einstellbar ist.

2. Seilprüfstand nach dem vorhergehenden Anspruch, wobei die Steuerungsvorrichtung (17) derart ausgebildet ist, dass die Belastung des Prüfseils (7) durch stärkeres und/oder schwächeres Zuschalten des Zusatzseilantriebs (6) während eines Spulvorgangs, insbesondere auch während eines Hubvorgangs und/oder während eines Senkvorgangs, variierbar ist.

3. Seilprüfstand nach einem der vorhergehenden Ansprüche, wobei die Steuerungsvorrichtung (17) derart ausgebildet ist, dass die Belastung des Prüfseils (7) durch stärkeres und/oder schwächeres Zuschalten des Zusatzantriebs (6) an verschiedenen Prüfseilabschnitten und/oder verschiedenen Stellen eines Prüflasthubwegs variierbar ist.

4. Seilprüfstand nach einem der vorhergehenden Ansprüche, wobei die Steuerungsvorrichtung (17) derart ausgebildet ist, dass Prüfungszyklen mit Heben unter Volllast und Senken ohne Last oder bei reduzierter Last und/oder Prüfungszyklen mit Heben ohne Last oder unter reduzierter Last und Senken unter Volllast durchfahrbar sind.

5. Seilprüfstand nach einem der vorhergehenden Ansprüche, wobei das Prüfseil (7) und das Sicherheitsseil (8) jeweils eine eigene Seileinscherung zur Prüflast (4) aufweisen und/oder das Prüfseil (7) von dem Prüfseilantrieb (5) und das Sicherheitsseil (8) von dem Zusatzseilantrieb (6) auf- und abspulbar ist derart, dass ein Heben und/oder Senken der Prüflast (4) wahlweise von dem Prüfseil (7) alleine oder von dem Sicherheitsseil (8) alleine oder sowohl von dem Prüfseil (7) als auch von dem Sicherheitsseil (8) bewerkstelligbar ist.

6. Seilprüfstand nach einem der vorhergehenden Ansprüche, wobei das Prüfseil (7) über eine Seileinscherung (13) zur Prüflast (4) geführt ist und über das Umlenksystem (20) sowohl zu dem Prüfseilantrieb (5) als auch zu dem Zusatzseilantrieb (6) oder einem weiteren Zusatzseilantrieb geführt ist, wobei der Prüfseilantrieb (5) und der Zusatzseilantrieb (6) zueinander gegenläufig betreibbar sind derart, dass das Prüfseil (7) von dem Prüfseilantrieb (5) auf den Zusatzseilantrieb (6) und/oder umgekehrt spulbar ist, wobei die Prüflast (4) vorzugsweise mehrere Teilprüflasten (4.1, 4.2, 4.3 ... 4.n) umfasst, die derart miteinander verbunden sind, dass die Teilprüflasten einzeln oder in Untergruppen auf dem Boden absetzbar sind, wobei zumindest eine andere Teilprüflast (4.n) in der Schwebe gehalten ist.

7. Seilprüfstand nach einem der vorhergehenden Ansprüche, wobei der Prüfseilantrieb (5) und/oder der Zusatzseilantrieb (6) einen Elektromotor umfassen, der mittels eines Frequenzumrichter variabel hinsichtlich Drehzahl und/oder Drehmoment steuerbar ist.

8. Seilprüfstand nach einem der vorhergehenden Ansprüche, wobei eine Erfassungseinrichtung (102) zur Erfassung zumindest einer Seilkenngröße sowie eine Auswerteeinrichtung (103) zur Auswertung der Seilkenngröße sowie Bereitstellung eines die Ablegereife und/oder die maximale Lebensdauer kennzeichnenden Ablegesignals in Abhängigkeit der Seilkenngrößenauswertung vorgesehen sind, wobei die Erfassungseinrichtung (102) vorteilhafterweise mehrere, verschieden ausgebildete Erfassungsmittel (102a, 102b, 102c, 102d, 102n) zur magnetischen, mechanischen, optischen und/oder elektronischen Erfassung mehrerer, verschiedener Seilkenngrößen umfasst, die von der Auswerteeinrichtung (103) einzeln und/oder in Kombination miteinander zur Erkennung der Ablegereife und/oder der maximalen Lebensdauer und/oder der zulässigen Biegewechselzahl auswertbar sind.

9. Seilprüfstand nach dem vorhergehenden Anspruch, wobei die Auswerteeinrichtung (103) ein Ablegesignal dann, wenn zumindest eine der erfassten Seilkenngrößen oder deren Veränderung einen zugehörigen Grenzwert überschreitet/unterschreitet, sowie dann, wenn eine aus allen oder einigen der erfassten Seilkenngrößen abgeleitete, mittelbare Summenkenngröße oder deren Veränderung einen zugehörigen Grenzwert überschreitet/unterschreitet, abgibt.

10. Seilprüfstand nach einem der beiden vorhergehenden Ansprüche, wobei die Erfassungseinrichtung (102) Erfassungsmittel (102a) zur Erfassung einer Veränderung eines Indikatorprofils (104), das in das Faserseil (101) eingebettet ist und aus einem von den Seilfasern verschiedenen Material besteht, aufweist, wobei die Erfassungsmittel (102a) vorzugsweise magnetisch arbeitend ausgebildet sind, insbesondere einen Magnetfeldsensor umfassen und das Indikatorprofil (104) aus einem Magnetfeld beinflussenden und/oder magnetisch leitenden und/oder magnetisierbaren Material, vorzugsweise einem metallischen Endlosprofil, besteht.

11. Seilprüfstand nach einem der vorhergehenden Ansprüche, wobei die Erfassungseinrichtung (102) Erfassungsmittel (102b) zur Erfassung einer Längung des Faserseils (101) aufweist.

12. Seilprüfstand nach dem vorhergehenden Anspruch, wobei die Erfassungsmittel (102b) einen Positionssensor (106) zur Erfassung eines vorbestimmten Seilpunkts an einer vorbestimmten Position, insbesondere eines oberen Abschaltpunkts für den Lasthaken der Prüflast (4), sowie einen Seilwindenstellungssensor (107) zur Erfassung der beim Anfahren der vorbestimmten Seilpunktposition sich einstellenden Windenstellung aufweisen und die Auswerteeinrichtung (103) die Veränderung der sich einstellenden Windenstellung überwacht, und/oder die Erfassungsmittel (102b) zur Erfassung der Längung im Faserseil (101) über dessen Länge verteilt mehrere Signalgeber (108), beispielsweise in Form von Markierungen, Transpondern, Signalreflektoren oder dergleichen aufweisen und Bestimmungsmittel zur Bestimmung des Abstands zwischen jeweils zwei Signalgebern (108) aufweisen und die Auswerteeinrichtung (103) die Veränderung des bestimmten Abstands zwischen jeweils zwei Signalgebern (108) auswertet.

13. Seilprüfstand nach einem der vorhergehenden Ansprüche, wobei die Erfassungseinrichtung (102) Querschnittsbestimmungsmittel (102c) zur Bestimmung des Seilquerschnitts, insbesondere der Seilquerschnittsfläche, aufweist und die Auswerteeinheit (103) den bestimmten Seilquerschnitt auswertet und auf Veränderungen überwacht, wobei die Querschnittsbestimmungsmittel (102c) insbesondere Durchmessererfassungsmittel (109) zur Erfassung des Seildurchmessers in zumindest zwei verschiedenen Ebenen umfasst und die Seilquerschnittsfläche aus den zumindest zwei bestimmten Seildurchmessern bestimmt, wobei die Durchmessererfassungsmittel (109) vorzugsweise zumindest ein elastisch vorspannbares Klemmmittelpaar, vorzugsweise gegen das Prüfseil (7) drückbare Seilrollen (110), die quer zur Seillängsrichtung beweglich aufgehängt sind, und Abstandsmessmittel (136) zur Messung des Abstands des Klemmmittelpaars voneinander aufweist.

14. Seilprüfstand nach einem der vorhergehenden Ansprüche, wobei die Erfassungseinrichtung (102) einen Lastkollektivzähler (102d) zur Erfassung des auf das Faserseil (101) einwirkenden Lastkollektivs umfassend die Seilzugbelastung und die Biegewechselanzahl besitzt.

15. Seilprüfstand nach einem der vorhergehenden Ansprüche, wobei der Erfassungseinrichtung (102) Seilweg- und/oder -positionserfassungsmittel (105) zur Bestimmung der Seilabschnitte, in denen Veränderungen der erfassten Seilkenngröße auftreten, zugeordnet sind und die Auswerteeinrichtung (103) zusammen mit dem Ablegesignal ein Seilabschnittsignal, das angibt, welcher Seilabschnitt ablegereif ist, bereitstellt.

## Claims

1. A cable test stand for testing a test cable (7) to establish service life, replacement age, allowed number of flex cycles, and/or winding behavior comprising a deflection system (20) comprising at least one deflector roll (11, 12; 18, 19) to deflect the test cable (7), a test cable drive (5) to wind and unwind the test cable (7) via the deflection system (20), and one test load (4) to load the test cable (7), an additional cable drive (6) for the purpose of winding and unwinding a safety cable (8) and/or the test cable (7), and a control device (17) for controlling the additional cable drive (6) and/or the test cable drive (5) in a manner adjusted to each other such that the load of the test cable (7) can be adjusted differently for different test cable segments and/or different winding directions and/or different winding cycles and/or different phases of a winding cycle.

2. The cable test stand according to the preceding claim, wherein the control device (17) is designed in such a manner that the load of the test cable (7) can be varied by stronger and/or weaker application of the additional cable drive (6) during a winding process, in particular also during a hoisting process and/or during a lowering process.

3. The cable test stand according to one of the preceding claims, wherein the control device (17) is designed in such a manner that the load of the test cable (7) can be varied by stronger and/or weaker application of the additional cable drive (6) to different segments of the test cable and/or different positions in the vertical path traveled by the test load.

4. The cable test stand according to one of the preceding claims, wherein the control device (17) is designed in such a manner that it is possible to go through testing cycles with hoisting under full load and lowering without a load, or with a reduced load, and/or to go through testing cycles with hoisting with no load or with a reduced load, and lowering with full load.

5. The cable test stand according to one of the preceding claims, wherein the test cable (7) and the safety cable (8) each have their own cable reeving to the test load (4), and/or the test cable (7) can be wound and unwound by the test cable drive (5), and the safety cable (8) can be wound and unwound by the additional cable drive (6), in such a manner that it is possible to hoist and/or lower the test load (4), as desired, by the test cable (7) alone, or by the safety cable (8) alone, or by both the test cable (7) and the safety cable (8).

6. The cable test stand according to one of the preceding claims, wherein the test cable (7) is routed via a cable reeving (13) to the test load (4), and is routed via the deflection system (20) to both the test cable drive (5) and to the additional cable drive (6) or to a further additional cable drive, wherein the test cable drive (5) and the additional cable drive (6) can be operated in opposite directions with respect to each other in such a manner that the test cable (7) can be wound by the test cable drive (5) to the additional cable drive (6) and/or vice-versa, wherein the test load (4) preferably has multiple partial test loads (4.1, 4.2, 4.3 ... 4.n) which are connected to each other in such a manner that the partial test loads can be set down on the ground individually or in groups, wherein at least one other partial test load (4.n) is held aloft.

7. The cable test stand according to one of the preceding claims, wherein the test cable drive (5) and/or the additional cable drive (6) comprises an electric motor, the rotation speed and/or torque of which can be variably controlled by means of a frequency rectifier.

8. The cable test stand according to one of the preceding claims further comprising a detection device (102) for the purpose of detecting at least one cable parameter, and an evaluation device (103) for the purpose of evaluating the cable parameter and for the purpose of providing a removal signal which characterizes the replacement age and/or the maximum service life according to the evaluation of the cable parameter, wherein the detection device (102) advantageously has multiple detection means (102a, 102b, 102c, 102d, 102n) with different designs for the purpose of detecting multiple, different cable parameters magnetically, mechanically, optically, and/or electronically, and wherein said cable parameters can be evaluated by the evaluation device (103) individually and/or in combination with each other for the purpose of determining the replacement age and/or the maximum service life and/or the allowable number of flex cycles.

9. The cable test stand according to the preceding claim, wherein the evaluation device (103) emits a removal signal when at least one of the detected cable parameters or the alteration thereof exceeds an associated threshold or falls below it, and also when an indirect summed parameter or the alteration thereof, said parameter being derived from all or from some of the detected cable parameters, exceeds an associated threshold or falls below it.

10. The cable test stand according to one of the two preceding claims, wherein the detection device (102) has detection means (102a) for the purpose of detecting an alteration of an indicator profile (104) which is embedded in the fiber rope (101) and comprises a material which is different from the rope fibers, wherein the detection means (102a) are preferably designed to work magnetically, in particular comprise a magnetic field sensor, and wherein the indicator profile (104) comprises a material which influences a magnetic field and/or is magnetically conductive and/or can be magnetized, preferably a metallic continuous section.

11. The cable test stand according to one of the preceding claims, wherein the detection device (102) has detection means (102b) for the purpose of detecting an elongation of the fiber rope (101).

12. The cable test stand according to the preceding claim, wherein the detection means (102b) have a position sensor (106) for the purpose of detecting a predetermined cable point at a predetermined position, in particular an upper switch-off point for the load hook of the test load (4), as well as a cable winding position sensor (107) for the purpose of detecting the winding position when the predetermined cable point position is reached, and the evaluation device (103) monitors the resulting change in the winding position, and/or the detection means (102b) have multiple signaling devices (108) for the purpose of detecting the elongation in the fiber rope (101), for example in the form of markings, transponders, signal reflectors or the like, said signaling devices being distributed over the length thereof, and have determination means for the purpose of determining the distance between each pair of signaling devices (108), and the evaluation device (103) evaluates the change in the determined distance between each pair of signaling devices (108).

13. The cable test stand according to one of the preceding claims, wherein the detection device (102) has cross-section determination means (102c) for the purpose of determining the cable cross-section, in particular the cable cross-section surface area, and the evaluation device (103) evaluates the determined cable cross-section and monitors it for changes, wherein the cross-section determination means (102c) particularly has diameter detection means (109) for the purpose of detecting the cable diameter in at least two different planes, and determines the cable cross-section surface area from the at least two determined cable diameters, wherein the diameter detection means (109) preferably has at least one pair of clamping means which can be elastically pre-tensioned, preferably pulleys (110) which can be pressed against the test cable (7) and which are suspended in a manner allowing movement transversely to the longitudinal direction of the cable, as well as distance measuring means (136) for the purpose of measuring the distance of the pair of clamping means from each other.

14. The cable test stand according to one of the preceding claims, wherein the detection device (102) has a load spectrum counter (102d) for the purpose of detecting the load spectrum acting on the fiber rope (101), including the tensile load on the cable and the number of flex cycles.

15. The cable test stand according to one of the preceding claims, wherein cable path and/or cable position detection means (105) for the purpose of determining the cable segments in which changes occur in the detected cable parameter, are assigned to the detection device (102), and the evaluation device (103) provides a cable segment signal, together with the removal signal, which indicates which cable segment is due for replacement.

## Revendications

1. Banc d'essai de câbles destiné à contrôler la durée de vie, l'état d'usure de remplacement, le nombre de pliages alternés admissibles et/ou le comportement au bobinage d'un câble à l'essai (7), comportant un système de renvoi (20) qui comprend au moins une poulie de renvoi (11, 12 ; 18, 19) destinée à renvoyer le câble à l'essai (7), un entraînement de câble à l'essai (5) destiné à enrouler et dérouler le câble à l'essai (7) par le biais du système de renvoi (20) et une charge d'essai (4) destinée à solliciter le câble à l'essai (7), un entraînement de câble supplémentaire (6) destiné à enrouler et dérouler un câble de sécurité (8) et/ou le câble à l'essai (7), et un dispositif de commande (17) destiné à commander l'entraînement de câble supplémentaire (6) et/ou l'entraînement de câble à l'essai (5) de telle manière coordonné l'un avec l'autre que la sollicitation du câble à l'essai (7) peut être réglée différemment pour différents segments du câble à l'essai et/ou différentes directions de bobinage et/ou différents cycles de bobinage et/ou différentes phases d'un cycle de bobinage.

2. Banc d'essai de câbles selon la revendication précédente, dans lequel le dispositif de commande (7) est réalisé de telle manière que la sollicitation du câble à l'essai (7) est modifiable par la mise en service de manière plus puissante et/ou moins puissante de l'entraînement de câble supplémentaire (6) pendant un procédé de bobinage, en particulier également pendant un procédé de levage et/ou pendant un procédé de descente.

3. Banc d'essai de câbles selon l'une des revendications précédentes, dans lequel le dispositif de commande (7) est réalisé de telle manière que la sollicitation du câble à l'essai (7) est modifiable par la mise en service de manière plus puissante et/ou moins puissante de l'entraînement supplémentaire (6) sur différents segments de câble à l'essai et/ou à différents endroits d'une course de levage de charge d'essai.

4. Banc d'essai de câbles selon l'une des revendications précédentes, dans lequel le dispositif de commande (17) est réalisé de telle manière que des cycles d'essai avec levage à pleine charge et descente sans charge ou à charge réduite et/ou des cycles d'essai avec levage sans charge ou à charge réduite et descente à pleine charge peuvent être exécutés.

5. Banc d'essai de câbles selon l'une des revendications précédentes, dans lequel le câble à l'essai (7) et le câble de sécurité (8) présentent chacun un mouflage propre pour la charge d'essai (4) et/ou le câble à l'essai (7) peut être enroulé et déroulé par l'entraînement de câble à l'essai (5) et le câble de sécurité (8) par l'entraînement de câble supplémentaire (6) de telle manière qu'un levage et/ou une descente de la charge d'essai (4) peut être effectué au choix par le câble à l'essai (7) seul ou par le câble de sécurité (8) seul ou tant par le câble à l'essai (7) que par le câble de sécurité (8).

6. Banc d'essai de câbles selon l'une des revendications précédentes, dans lequel le câble à l'essai (7) est guidé par le biais d'un mouflage de câble (13) vers la charge d'essai (4) et est guidé par le biais du système de renvoi (20) tant vers l'entraînement de câble à l'essai (5) que vers l'entraînement de câble supplémentaire (6) ou un autre entraînement de câble supplémentaire, l'entraînement de câble à l'essai (5) et l'entraînement de câble supplémentaire (6) pouvant fonctionner en sens contraire l'un par rapport à l'autre de telle manière que le câble à l'essai (7) peut être bobiné par l'entraînement de câble à l'essai (5) sur l'entraînement de câble supplémentaire (6) et/ou inversement, la charge d'essai (4) comprenant de préférence plusieurs charges d'essai - partielles (4.1, 4.2, 4.3 ... 4.n) qui sont reliées les unes aux autres de telle manière que les charges d'essai partielles peuvent être déposées au sol individuellement ou en sous-groupes, tandis qu'au moins une autre charge d'essai partielle (4.n) est maintenue en suspension.

7. Banc d'essai de câbles selon l'une des revendications précédentes, dans lequel l'entraînement de câble à l'essai (5) et/ou l'entraînement de câble supplémentaire (6) comprennent un moteur électrique qui peut être commandé de manière variable en ce qui concerne la vitesse et/ou le couple au moyen d'un variateur de fréquence.

8. Banc d'essai de câbles selon l'une des revendications précédentes, dans lequel un dispositif de détection (102) est destiné à la détection au moins d'une caractéristique de câble et un dispositif d'évaluation (103) est destiné à l'évaluation de la caractéristique de câble et à fournir un signal de dépose signalisant l'état d'usure de remplacement et/ou la durée de vie maximale en fonction de l'évaluation de la caractéristique de câble, le dispositif de détection (102) comprenant de manière avantageuse plusieurs moyens de détection (102a, 102b, 102c, 102d, 102n) réalisés de manière différente destinés à détecter de manière magnétique, mécanique, optique et/ou électronique plusieurs caractéristiques de câble différentes, qui peuvent être évaluées par le dispositif d'évaluation (103) individuellement et/ou en combinaison les unes avec les autres afin de détecter l'état d'usure de remplacement et/ou la durée de vie maximale et/ou le nombre de pliages alternés admissibles.

9. Banc d'essai de câbles selon la revendication précédente, dans lequel le dispositif d'évaluation (103) émet un signal de dépose quand au moins une ou la modification de l'une des caractéristiques de câble détectées devient inférieure/supérieure à une valeur limite associée, ainsi que quand une ou la modification d'une caractéristique cumulée indirecte dérivée à partir de toutes ou de quelques-unes des caractéristiques de câble détectées devient inférieure/supérieure à une valeur limite associée.

10. Banc d'essai de câbles selon l'une des deux revendications précédentes, dans lequel le dispositif de détection (102) comporte des moyens de détection (102a) destinés à détecter une modification d'un profilé indicateur (104) qui est encastré dans le câble en fibres (101) et est composé d'un matériau différent des fibres de câble, les moyens de détection (102a) étant réalisés de préférence à fonctionnement magnétique, comprenant en particulier un capteur de champ magnétique et le profilé indicateur (104) étant composé d'un matériau influençant le champ magnétique et/ou conducteur magnétique et/ou aimantable, de préférence d'un profilé métallique sans fin.

11. Banc d'essai de câbles selon l'une des revendications précédentes, dans lequel le dispositif de détection (102) comporte des moyens de détection (102b) destinés à détecter un allongement du câble en fibres (101).

12. Banc d'essai de câbles selon la revendication précédente, dans lequel les moyens de détection (102b) comportent un capteur de position (106) destiné à détecter un point du câble prédéterminé à une position prédéterminée, en particulier un point de coupure supérieur pour le crochet de levage de la charge d'essai (4), ainsi qu'un capteur de position de treuil (107) destiné à détecter le positionnement du treuil lors du déplacement jusqu'à la position du point du câble prédéterminée, et le dispositif d'évaluation (103) surveille la modification du positionnement du treuil, et/ou les moyens de détection (102b) destinés à détecter l'allongement dans le câble en fibres (101) comportent de préférence distribués sur sa longueur plusieurs générateurs de signaux (108), par exemple sous la forme de repères, de transpondeurs, de réflecteurs de signaux ou similaires et comportent des moyens de détermination destinés à déterminer la distance entre deux générateurs de signaux (108) respectifs et le dispositif d'évaluation (103) évalue la modification de la distance déterminée entre deux générateurs de signaux (108) respectifs.

13. Banc d'essai de câbles selon l'une des revendications précédentes, dans lequel le dispositif de détection (102) comporte des moyens de détermination de la section transversale (102c) destinés à déterminer la section transversale du câble, en particulier la surface de section transversale du câble, et l'unité d'évaluation (103) évalue la section transversale du câble déterminée et en surveille les modifications, les moyens de détermination de la section transversale (102c) comprennent en particulier des moyens de détection du diamètre (109) destinés à détecter le diamètre du câble à au moins deux niveaux différents et déterminent la surface de section transversale du câble à partir des au moins deux diamètres de câble déterminés, les moyens de détection du diamètre (109) comportant au moins une paire de moyens de serrage pouvant être précontraints élastiquement, de préférence des poulies (110) pouvant être pressées contre le câble à l'essai (7) qui sont accrochées mobiles transversalement à la direction longitudinale du câble, et des moyens de mesure de distance (136) destinés à mesurer la distance entre les moyens de serrage de la paire de moyens de serrage.

14. Banc d'essai de câbles selon l'une des revendications précédentes, dans lequel le dispositif de détection (102) possède un compteur d'ensemble des charges (102d) destiné à détecter l'ensemble des charges agissant sur le câble en fibres (101) qui comprennent la contrainte de traction du câble et le nombre de pliages alternés.

15. Banc d'essai de câbles selon l'une des revendications précédentes, dans lequel des moyens de détection de parcours et/ou de position du câble (105) destinés à déterminer les segments de câble dans lesquels des modifications de la caractéristique de câble se produisent sont associés au dispositif de détection (102) et le dispositif d'évaluation (103) émet avec le signal de dépose un signal de segment de câble qui indique quel segment de câble a atteint l'état d'usure de remplacement.
